# EUROPEAN PATENT APPLICATION

(11) **EP 1 345 459 A1**
(43) Date of publication of application: **17.09.2003**
(21) Application number: 02251797.3
(22) Date of filing: 13.03.2002
(51) Int. Cl.: H04Q 7/22

(54) **Method and system for communicating short messages to user terminals over a common channel**

(71) Applicant: LUCENT TECHNOLOGIES INC., Murray Hill, New Jersey 07974-0636 (US)
(72) Inventor: George, Thomas, Cerritos, CA 90703 (US)
(74) Representative: Sarup, David Alexander

(57) **Abstract**

A method is provided of communicating short messages to user terminals over a common channel. The method includes encoding each message so as to be decodable by selected user terminal(s), combining the encoded messages for transmission as a combined message, and transmitting the combined mesage. Each user terminal receives the combined message and decodes the message(s) intended for itself from the combined message received.

## Description

### Technical Field

The present invention relates to a method of communicating short messages to user terminals over a common channel. The present invention also relates to a radio telecommunications system. The present invention also relates to a method of transmitting short messages from a base station over a common channel. The present invention also relates to a method of receiving by a user terminal a combined message and decoding the message(s) intended for the user terminal from the combined message received. The present invention also relates to a radio telecommunications station. The present invention also relates to a radio telecommunications user terminal.

### Background of the Invention

In a radio telecommunication system, SMS (Short Message Service) is a known non real-time service used to transfer messages between two or more mobile stations, or a network and mobile station. In the former case (messages between two or more mobile stations via the network) the message is transmitted using a dedicated channel on both the reverse link (i.e uplink from a first mobile station to a base station) and the forward link (i.e.downlink from the network to a second mobile station).

On the reverse link where the communication paths from mobile stations to a base station are multi-point to point, the use of one dedicated channel for each user is acceptable. On the forward link which is a point to multi-point scenario the use of one dedicated channel for each user represents a big wastage of radio channel resources and so poor efficiency in radio bandwidth usage.

This problem of inefficient radio channel utilisation for SMS services becomes worse the more that SMS services are used. SMS is subject to ever-increasing demand at present and in Third Generation Partnership Project 3GPP systems, such as Universal Mobile Telecommunications System UMTS, SMS usage is projected to grow even further.

To summarise, the known approach thus involves inefficient utilisation of forward/downlink dedicated/shared radio channel for SMS (non real-time services).

Such a known approach is often called multi-casting. Traditionally multi-casting has been used in mobile communication to transmit common messages to all or a selected group of users. Such an approach is common in the Internet world where common message is transmitted to many computers.

### Summary of the Invention

The present invention provides a method of communicating short messages to user terminals over a common channel, comprising encoding each message so as to be decodable by selected user terminal(s), combining the encoded messages for transmission as a combined message, transmitting the combined message, each user terminal receiving the combined message and decoding the message(s) intended for itself from the combined message received.

Preferred embodiments of the present invention involving what can be considered as mobile terminated SMS multicasting use a single dedicated or shared channel on the downlink to transmit individual messages for multiple mobiles simultaneously. This overcomes the shortfall of current mobile terminated SMS messaging whereby it uses more than one channel for simultaneous messaging. The proposed mobile terminated SMS multicasting increases the radio transmission efficiency in third generation 3G systems by using less channels to transmit the same information. SMS messages for all or multiple users are transmitted on a single shared or dedicated radio channel. The multi-casting capability on the downlink due to point to multi-point transmission scenario is made use of. A single channel is used on the downlink to transmit mobile terminated SMS message for all or multiple users in one or several cells.

Preferred embodiments of the invention have the advantage that fewer channels are required than the conventional approach of one channel per user for SMS. The problem of traffic congestion due to non-availability of dedicated / shared channels for call signalling when they are being used for SMS is practically eliminated. SMS operation costs are reduced and revenue increased in consequence.

The technique is useful in, for example, third generation 3G systems, e.g UMTS and CDMA2000 systems and also applicable in GSM , CDMA, and TDMA systems.

Preferably the short messages are short message service SMS messages.

Preferably the messages are grouped for encoding and combining based on current cell location of the respective intended recipient user terminal.

Furthermore preferably the encoding of a message comprises applying a fixed or dynamic compression.

Preferably the encoding of a message comprises applying a code associated with the intended recipient user terminal of that message, the intended recipient user terminal being provided with its respective code for the decoding.

Furthermore preferably the encoding of a message comprises data randomisation for security by applying a key code associated with the intended recipient user terminal of that message.

Furthermore preferably the encoding of a message comprises applying a cipher key code for security associated with the intended recipient user terminal of that message.

Furthermore preferably the encoding of each message comprises orthogonalisation of each message by a respective orthogonal code.

In preferred embodiments, a unique code such as an orthogonal code is used for each user message. The message for each user can be decoded only by the unique code assigned to that user. Techniques such as data randomising and ciphering are used to maintain privacy and security of the message for users and also data compression increases efficiency. Privacy is maintained as each user can decode only his own message.

Preferably the user terminals are Universal Mobile Telecommunications System UMTS user terminals operating in a UMTS radio telecommunications network.

Preferably the common channel is a downlink shared channel DSCH or dedicated channel DCH.

Preferably the user terminals are informed in a paging message sent to the user terminals in advance as to on which channel to receive the combined message and when. Preferably the paging message includes an identifier that a short message will be sent, an identifier that the short message is included in the combined message. an indicator of which is the common channel, an indicator of the intended time of transmission of the combined message, and preferably an indicator of the code for the decoding.

The present invention also provides a corresponding radio telecommunications system. The present invention also provides a corresponding method of transmitting short messages from a base station over a common channel. The present invention also provides a corresponding method of receiving by a user terminal a combined message and decoding the message(s) intended for the user terminal from the combined message received. The present invention also provides a corresponding radio telecommunications station. The present invention also provides a corresponding radio telecommunications user terminal.

The present invention also provides a radio telecommunications system comprising a network in use in radio telecommunication with user terminals and operative such that short messages to the user terminals are communicated over a common channel from the network, the network comprising an encoder for coding each message so as to be decodable by selected user terminal(s), a combiner for combining the encoded messages for transmission as a combined message, and a transmitter for transmitting the combined message, each user terminal being operative to receive the combined message and decoding the message(s) intended for itself.

The present invention also provides a method of transmitting short messages from a station over a common channel, comprising encoding each message so as to be decodable by selected user terminal(s), combining the encoded messages for transmission as a combined message, and transmitting the combined message.

The present invention also provides a method of receiving by a user terminal a combined message and decoding the message(s) intended for the user terminal from the combined message received, the combined message including short messages to user terminals encoded such that each short message is decodabie by selected user terminal(s).

The present invention also provides a radio telecommunications station operative to transmit short messages over a common channel, the station comprising an encoder for encoding each short message so as to be decodable by selected user terminal(s), a combiner for combining the encoded messages for transmission as a combined message, and a transmitter for transmitting the combined message. The station is preferably a base station.

The present invention also provides a radio telecommunications user terminal operative to receive a combined message and a decoder operative to decode the message(s) intended for itself from the combined message received, the combined message including short messages to user terminals coded such that each short message is decodable by selected user terminal(s).

### Brief Description of the Drawings

A preferred embodiment of the present invention will now be described by way of example and with reference to the drawings, in which:
Figure 1 is a diagram illustrating SMS multicasting using a single channel for multiple users.
Figure 2 is a diagram illustrating a radio telecommunications network. and
Figure 3 is a diagram illustrating call flow involved.

### Detailed Description

A key issue addressed in using a multi-casting approach on the forward channel is that the message for each user is unique, but the message of all or multiple users have to be transmitted on a single dedicated/shared radio channel; in the case of a UMTS system, this means transmitted on the same frequency and using the same channelisation code.

A technique is proposed in which messages of all/multiple users are transmitted on a single channel, yet ensuring that each user gets only the message addressed to him. The technique involves encoding each user's information with a unique code so that all messages can be transmitted on the same dedicated or shared radio channel and each user can decode only his message with the unique code.

The transmission and reception process is basically as follows
1. Each user message first undergoes normal compression using any standard fixed known compression techniques.
2. After this the message is encrypted using a unique encryption key derived from the Mobile (Electronic serial number) or the UMTS subscriber identity module USIM number. The encryption involves bit-wise X-OR of the user message data bits with an encryption key. This could be the encryption key used for the last successful call attempt.
3. After encryption the data again undergoes bit-wise X-OR operation with a 256 bit long unique orthogonal code.
4. After each user data undergoes the operations described in steps 1 to 3 above, they are added together and the whole data further undergoes final fixed or dynamic compression.
5. The compressed data is then transmitted on the forward link (downlink) using a single dedicated or shared radio channel.
6. On receiving the data, the mobile station de-compresses the data, and use the correct orthogonal key to retrieve the encrypted data. The encryption key is further used to retrieve the compressed data, after this the data is further de-compressed to get the correct user message.

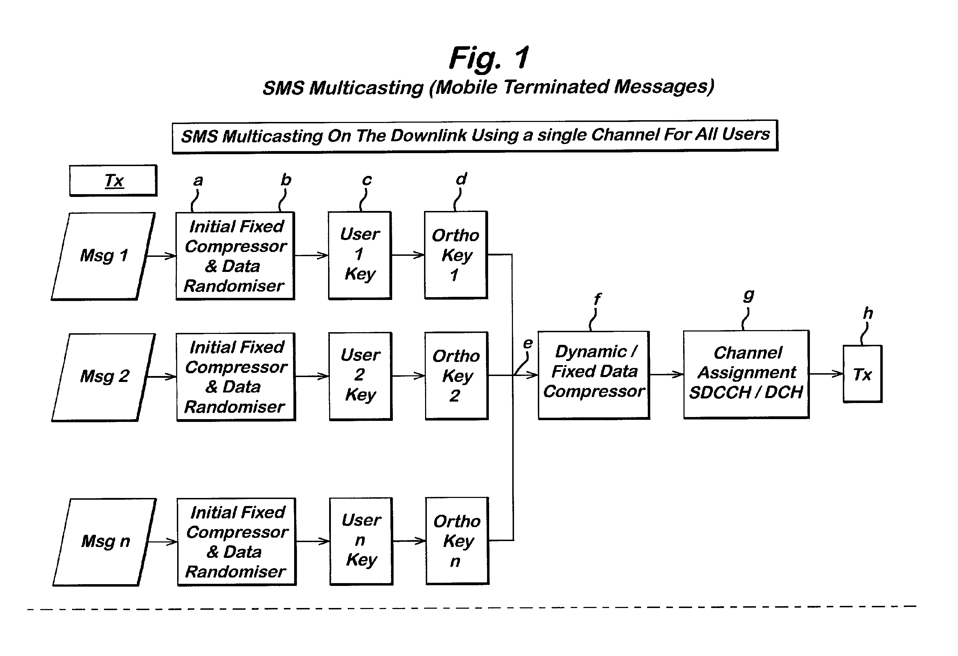

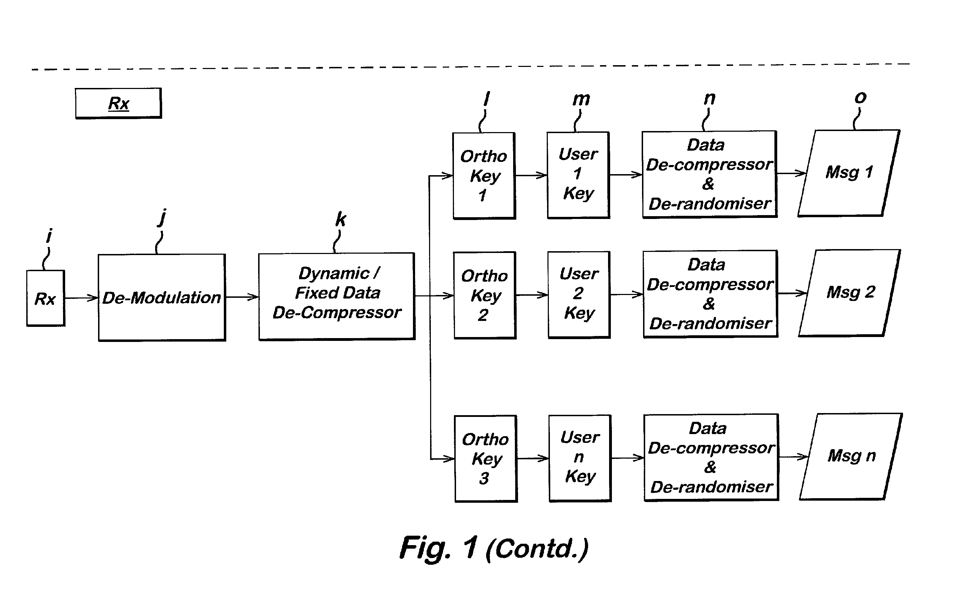

The technique is now explained in more detail below with reference to Figure 1. Figure 1 shows a technical realisation of SMS multicasting on the downlink using a single shared/dedicated channel for all/group users having unique individual messages.

### Transmission:

1. All mobile terminated messages (msg1, msg2..., msgn) are first pooled in a central database. The messages are then partitioned in several groups based on user's cell location, LA (Location Area) and SA (Service Area). This is done by a smart algorithm for good efficiency of bandwidth usage.
2. After partitioning of messages, each mobile terminated message undergoes an initial fixed compression (a) that is optional. The compressed message is then fed (b) for security into a data randomiser, the randomisation of which is a calculated based on an fixed random function and a unique user key (ESN, SIM No etc.). The randomisation is unique to each user.
3. For increased security, a cipher key (e.g. user 1 key) that is again unique to each user further ciphers (c) the randomised message. This could be the cipher key used for last successful call or call attempt.
4. The ciphered message data is then orthogonalised (d) using a 256 bit long orthogonal code. Zeros or spaces are added to end of ciphered message bits after the maximum allowable message length.
5. The orthogonalised message of all the users in a partition is then combined (e) and undergoes a fixed or dynamic compression (f). This message can (in other embodiments not shown) be further locked by another unique key which was generated for last successful call or call attempt following an authentication involving the mobile stations and is common for the group of cells / location area LA / service area SA over which the mobiles for which the messages are destined are spread. This can be considered analogous to a process, where text messages from several users are first added in one single text file and then the text file is zipped using standard software for compression (e.g. WinZip) and password protected.
6. A downlink shared DSCH, or a dedicated channel DCH, for example standalone dedicated control channel SDCCH, is then assigned (g).The compressed message is then transmitted (h) as a single file on a shared or dedicated channel, the details of which are provided to the mobile on the paging channel.

### Reception:

1. The mobile station tunes (i) to the particular shared/dedicated channel based on the information it received on the paging channel.
2. The message file is then downloaded (j) with the details of the fixed or dynamic compression technique in the header.
3. The message file is first opened using the unique key and then de-compressed (k) and is ready for de-orthogonalisation.
4. The orthogonal code that is made known to the mobile on the paging channel is then used to de-orthogonalise (I) the de-compressed message bits. So, each user can decode only his message, since all other de-compressed message bits would reduce to zeros.
5. The de-orthogonalised message is then de-ciphered (m) using the unique decipher key.
6. The de-ciphered message bit is then put in right order and sequence by the derandomisation process (n). This is further de-compressed if required and the user message is retrieved (o).

### Call Flow Example:

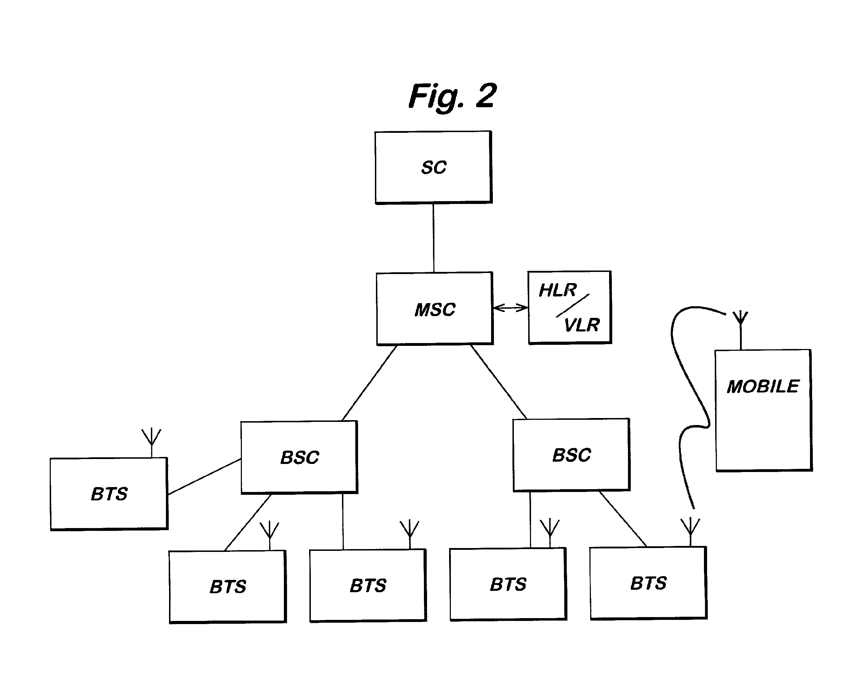

As shown in Figure 2, a service centre SC for SMS communicates with a mobile switching centre MSC which controls several base station controllers (radio network controllers in UMTS terminology) each of which controls several base transceiver stations BTSs (Node B's in UMTS terminology). The base transceiver stations BTS communicate by radio with mobile stations MS's (one of which is shown for simplicity in Figure 2.

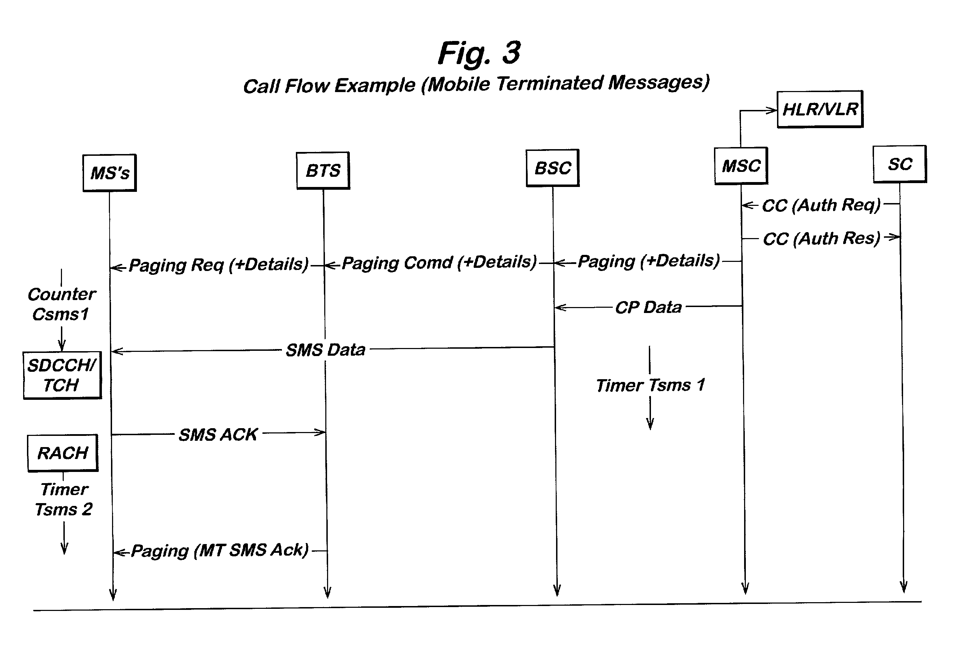

Figure 3 shows an example call flow to implement the above described SMS messaging technique in the mobile radio telecommunications. e.g. UMTS network shown in Figure 2. There are several ways to implement the technique; the call flow example shown in Figure 3 shows one possible method.

The example call flow as shown in Figure 3 involves the following steps:
1. Authentication for all mobile-terminated messages is done in the network between the service centre SC for SMS and mobile switching centre MSC. This is because those network elements know whether the mobiles for which the SMS messages are destined have valid service with the network.
2. After authentication, the mobile switching centre MSC sends a paging message to the base station controller BSC. The base station controller BSC sends a paging request command with details to the base transceiver station BTS and the paging request with details is transmitted to the mobile station. Counters, timers, tags etc. could be used to implement this. In this example, the paging request details include a Protocol Identifier that an SMS message is to be sent, a Sub-Protocol Identifier that the SMS message will be mobile- terminated SMS messaging over a common channel (DSCH or DCH), and a value of a counter Csms 1 being the number of frames the mobile station has to wait before tuning to a dedicated or shared channel to receive the SMS message file. The paging request details also include the details of which channel the mobile has to tune into to download the SMS combined (i.e multicast) message file.
3. After receiving the paging command the mobile starts the counter Csms 1.
4. Once the Csmsl count has been reached the mobile tunes to the dedicated or shared channel identified.
5. The mobile then receives the SMS message file, which
6. triggers a timer Tsms1 to start in the network. Tsms1 is a timer before the expiry of which the network should get a valid acknowledgement from the mobile station that the last SMS message was received successfully.
7. The mobile station after successfully decoding the message sends an acknowledgement on a random access channel RACH with a value (cause value) indicating that the last SMS message has been successfully decoded. In other words, the uplink random access channel RACH is used to update information that the message has been successfully decoded with a special tag or number.
8. This triggers a timer Tsms2 in the mobile station. This is a timer before the expiry of which the mobile should receive a paging message in response to the acknowledgement on the random access channel RACH as explained in step 7 above. If this timer expires then the mobile sends again an acknowledgement on the uplink random access channel RACH as explained in step 7 above.

The above example call flow is implemented by appropriate programming of the Radio Resource Control&Allocation (RRC&A) stages and call flow protocol stacks in the mobile stations MS, the base transceiver stations BTS, the base station controllers BSC , the mobile switching centres MSC, and service centres SC respectively.

### Various Options

Since SMS sent by the network is mobile terminated, the authentication is done at the network level without having to involve the mobile station for which the messages are destined. This avoids lots of signalling. Alternatively authentication for mobile terminated calls can be switched off at the network level.

Implementation in different technologies may require changes to current standards pertaining to technical realisations of short message service SMS.

## Claims

1. A method of communicating short messages to user terminals over a common channel, comprising encoding each message so as to be decodable by selected user terminal(s), combining the encoded messages for transmission as a combined message, transmitting the combined message, each user terminal receiving the combined message and decoding the message(s) intended for itself from the combined message received.

2. A method of communicating according to claim 1, in which the short messages are short message service SMS messages.

3. A method of communicating according to claim 1 or claim 2, in which the messages are grouped for encoding and combining based on current cell location of the respective intended recipient user terminal.

4. A method of communicating according to any preceding claim, in which the encoding of a message comprises applying a code associated with the intended recipient user terminal of that message, the intended recipient user terminal being provided with its respective code for the decoding.

5. A method of communicating according to any preceding claim, in which the user terminals are Universal Mobile Telecommunications System UMTS user terminals operating in a UMTS radio telecommunications network.

6. A method of communicating according to any preceding claim, in which the user terminals are informed in a paging message sent to the user terminals in advance as to on which channel to receive the combined message and when.

7. A method of communicating according to claim 6. in which the paging message includes an identifier that a short message will be sent, an identifier that the short message is included in the combined message, an indicator of which is the common channel, and an indicator of the intended time of transmission of the combined message.

8. A radio telecommunications system comprising a network in use in radio telecommunication with user terminals and operative such that short messages to the user terminals are communicated over a common channel from the network, the network comprising an encoder for coding each message so as to be decodable by selected user terminal(s), a combiner for combining the encoded messages for transmission as a combined message, and a transmitter for transmitting the combined message, each user terminal being operative to receive the combined message and to decode the message(s) intended for itself.

9. A radio telecommunications station operative to transmit short messages over a common channel, the station comprising an encoder for encoding each short message so as to be decodable by selected user terminal(s), a combiner for combining the encoded messages for transmission as a combined message, and a transmitter for transmitting the combined message.

10. A radio telecommunications user terminal operative to receive a combined message and a decoder operative to decode the message(s) intended for itself from the combined message received, the combined message including short messages to user terminals coded such that each short message is decodable by selected user terminal(s).
